# EUROPÄISCHE PATENTSCHRIFT

(11) **EP 0 612 690 B1**
(45) Veröffentlichungstag und Bekanntmachung des Hinweises auf die Patenterteilung: **12.03.1997**
(21) Anmeldenummer: 93120282.4
(22) Anmeldetag: 16.12.1993
(51) Int. Cl.: C01B 39/00, B01J 20/18

(54) **Verfahren zum Modifizieren von Molekularsieben mittels Ionenaustausch**
Process for the modification of molecular sieves by ion exchange
Procédé de modification de tamis moléculaires par échange d'ions

(30) Priorität: 17.02.1993 DE 4304821
(43) Veröffentlichungstag der Anmeldung: 31.08.1994
(73) Patentinhaber: Degussa Aktiengesellschaft, 60311 Frankfurt (DE)
(72) Erfinder: Weitkamp, Jens, Prof. Dr., D-72160 Horb am Neckar (DE); Ernst, Stefan, Dr., D-70567 Stuttgart (DE); Bock, Thomas, D-70619 Stuttgart (DE); Kromminga, Thomas, Dr., D-67549 Worms (DE); Kiss, Akos, Dr., D-63457 Hanau (DE); Kleinschmit, Peter, Prof., D-63457 Hanau (DE)

(56) Entgegenhaltungen:
- EP-A- 0 458 414
- CATALYSIS LETTERS, Band 12, 1992; KARGE et al., Seiten 147-155

## Beschreibung

Die Erfindung betrifft ein Verfahren zum Modifizieren von Molekularsieben mittels Ionenaustausch.

Ein bekanntes Verfahren zum Einbringen von Edelmetallen, wie z. B. Platin oder Palladium, in mittel- und weitporige Zeolithe ist der Ionenaustausch in wäßriger Suspension mit den entsprechenden Tetraammin-Komplexen (z. B. [Pt(NH₃)₄]Cl₂ oder [Pd(NH₃)₄]Cl₂). Dieses Verfahren ergibt eine hohe Verteilung des Edelmetalls in dem Kristallitinneren von weitporigen (z. B. Y) und mittelporigen (z. B. ZSM-5) Zeolithen.

Engporige Zeolithe (z. B. ZSM-58, Zeolith A) lassen sich dagegen auf diese Weise nicht mit Platin oder Palladium dotieren, weil der Edelmetall-Komplex zu sperrig ist, um in die Achtring-Kanäle dieser Zeolithe hineindiffundieren zu können. Die einzige bekannte Methode, Edelmetall in die Hohlräume von engporigen Zeolithen einzubringen, besteht darin, dem Synthesegel für die Zeolith-Herstellung vor der Kristallisation den Edelmetall-Komplex in gewünschter Menge zuzusetzen, so daß der Zeolith um den Komplex herum kristallisiert (P. B. Weisz und V. J. Frilette, J. Phys. Chem. 64, 382 (1960) und P. B. Weisz, et al., J. Catal. 1, 307/312 (1962)). Durch Einbringen von zum Beispiel [Pt(NH₃)₄]Cl₂ in das Synthesegel für Zeolith A kann auf bekannte Weise ein formselektiver Hydrierkatalysator hergestellt werden.

Das bekannte Verfahren zur Dotierung von engporigen Zeolithen hat den Nachteil, daß es nicht universell auf alle Zeolithtypen anwendbar ist. Die Anwesenheit geringer Mengen Verunreinigung, wie in diesem Fall der Edelmetallkomplex, im Synthesegel behindert die Kristallisation des gewünschten Zeolithen.

Gegenstand der Erfindung ist ein Verfahren zum Modifizieren von engporigen Molekularsieben des Typs ZSM-58, Alpha, SAPO-42, Rho und/oder ZK5 mittels Ionenaustausch, welches dadurch gekennzeichnet ist, daß man Kationen mittels Festkörperionenaustausch in die Molekularsiebe einbringt, dabei wird der Festkörperionenaustausch durchgeführt, indem man den Zeolith mit einer Verbindung, die das Kation enthält, innig vermischt, das Gemenge in einem Inertgasstrom auf Temperaturen von 400 bis 600 °C aufheizt, danach auf Raumtemperatur abkühlt und anschließend im Wasserstoffstrom für 10 bis 14 Stunden bei 280 bis 350 °C reduziert.

Als Kationen können Kationen eines Metalls aus der ersten bis achten Nebengruppe des Periodensystems eingesetzt werden. Insbesondere können Kationen der Elemente Platin, Palladium, Molybdän und/oder Vanadium eingesetzt werden.

Das Prinzip des Festkörperionenaustausches ist bekannt (H.G. Karge und H.K. Beyer in "Zeolite Chemistry and Catalysis", P.A. Jacobs et al., Hrsg., S. 43/64, Studies in Surface Science and Catalysis, Bd. 69, Elsevier, Amsterdam, Oxford, New York, Tokyo (1991)).

Der Festkörperionenaustausch kann durchgeführt werden, indem man eine abgewogene Menge an kalziniertem und aktiviertem Zeolith wird mit einer vorausberechneten Menge an PtCl₂, PdCl₂, RhCl₃, CuCl₂, V₂O₅ oder einer anderen Verbindung der Edelmetalle (z. B. andere Halogenide oder Oxide), die das Edelmetall enthält, innig vermischt, das Gemenge dann im Inertgasstrom, z. B. Heliumgas- oder Stickstoffstrom auf Temperaturen von 400 bis 600 °C aufheizt, danach auf Raumtemperatur abkühlt und anschließend im Wasserstoffstrom (VH₂ = 15 cm³/min) für 10 bis 14 Stunden bei 280 bis 350 °C reduziert, um aus dem kationisch eingebrachten Metall kleine Metallcluster zu erzeugen.

Das erfindungsgemäße Verfahren kann bei den folgenden engporigen Molekularsieben oder Zeolithtypen angewandt werden:

Zeolith ZSM-58 (beschrieben in EPA 193 282), Molekularsiebe mit der Struktur von Zeolith A (Zeolith Alpha, beschrieben in USP 3 375 205) oder SAPO-42 (beschrieben in USP 4 440 871), Zeolith Rho (u. a. beschrieben in J. Catal. 113, 367/382 (1988)) und Zeolith ZK-5 (beschrieben in USP 3 720 753).

Um qualitativ zwischen Metallclustern innerhalb des Porensystems und auf der äußeren Kristallitoberfläche des Zeoliths unterscheiden zu können, kann beispielsweise die von Dessau (R.M. Dessau, J. Catal. 77, 304/306 (1982)) eingeführte eduktselektive katalytische Hydrierung benutzt werden. Hierzu wird ein Gemisch aus gleichen Stoffmengen eines schlanken und eines sperrigen Alkens (Hexen-(1) oder Penten-(1) und 2,4,4-Trimethylpenten-(1)) eingesetzt.

Handelt es sich bei dem über Festkörperionenaustausch eingebrachten Metall um einen Oxidationskatalysator, so kann die Testreaktion beispielsweise mit einem gasförmigen Gemisch bestehend aus einem n-Alkan und einem stark verzweigten Isoalkan mit Luft oder Sauerstoff als Trägergas durchgeführt werden.

Die erfindungsgemäß hergestellten ausgetauschten Molekularsiebe oder Zeolithe zeichnen sich dadurch aus, daß sie in der Testreaktion mit hoher Selektivität das schlanke Alken hydrieren bzw. das schlanke Alkan oxidieren. Der überwiegende Teil des eingebrachten Metalls befindet sich also in den Poren und Hohlräumen der engporigen Zeolithe. Nur diese Molekularsiebe eignen sich für formselektive, metallkatalysierte Umsetzungen als Katalysator.

Auf bekanntem Wege hergestellte, das heißt, mittels Ionenaustausch in wäßriger Suspension mit Metall beladene engporige Zeolithe, sind nicht formselektiv. Bei ihnen befindet sich das Metall an der äußeren Oberfläche der Zeolithkristallite und ist daher auch für sperrige Moleküle frei zugänglich.

### Beispiel 1

Zeolith ZSM-58 mit einem Modul von n_{SiO₂}/n_{Al₂O₃} = 50 wird entsprechend EPA 193 282 mit Methyltropiniumiodid als Templat synthetisiert, anschließend für 16 Stunden bei 540 °C in Luft calciniert und dann einem mehrfachen Ionenaustausch in wäßriger Suspension mit einem großen Überschuß an NH₄NO₃-Lösung unterworfen. Durch die nachfolgende Calcination bei 550 °C wird die Brönsted-saure (H⁺-)Form erhalten. Hiervon werden jeweils ca. 0,5 g (Trockenmasse) für 12 Stunden bei 550 °C im Heliumstrom (V_{He} = 33 cm³/min) behandelt. Anschließend wird der so aktivierte Zeolith bei Raumtemperatur unter Inertgas mit 0,007 g PtCl₂ oder 0,009 g PdCl₂ innig vermischt. Das Gemisch wird im trockenen Heliumstrom (V_{He} = 33 cm³/min) mit einer Rate von 3 K/min auf 550 °C (mit PtCl₂) bzw. 480 °C (mit PdCl₂) aufgeheizt. Während des Festkörperionenaustauschs entstehen pro Mol eingetauschtem PtCl₂ bzw. PdCl₂ zwei Mole HCl-Gas. Die HCl-Entwicklung wird differentiell mit einem Wärmeleitfähigkeitsdetektor oder einem Massensprektrometer und integral durch Absorption des Chlorwasserstoffs in entmineralisiertem Wasser über die Zunahme der elektrischen Leitfähigkeit der Absorptionsflüssigkeit verfolgt. Nach Beendigugng des Festkörperionenaustauschs wird die entstandene Salzsäure mit 0,01 m NaOH-Lösung und Bromthymolblau als Indikator titriert. Die Ergebnisse sind in Tabelle 1 zusammengefaßt. Aus den Daten in Tabelle 1 geht hervor, daß der Festkörperionenaustausch bei den hier eingesetzten Mengenverhältnissen und unter den angewandten Bedingungen praktisch vollständig abläuft. Die ausgetauschten Zeolithe enthalten 1,0 Gew.-% PtCl₂ bzw. 1,2 Gew-% PdCl₂.

**Tabelle 1**

| MeCl₂ | n_{MeCl₂, ein}, mol | n_{Cl⁻, aus}, mol | m_{Me}/m_{Z}, % |
|---|---|---|---|
| PtCl₂ | 2,6 10⁻⁵ | 5,1 10⁻⁵ | 1,0 |
| PtCl₂ | 5,1 10⁻⁵ | 1,1 10⁻⁴ | 1,2 |

Die Abkürzungen bedeuten:
- MeCl₂:: eingesetztes Metallsalz
- n_{MeCl₂,ein}:: eingewogene Stoffmenge an MeCl₂
- n_{Cl⁻,aus}:: titrierte Stoffmenge an Chloridionen
- m_{Me}/m_{Z}:: Beladung des trockenen Zeoliths mit Metall nach dem Festkörperionenaustausch

### Beispiel 2

Bei der Reduktion der mittels Festkörperionenaustausch in die Zeolithe eingebrachten Metallkationen mit Wasserstoff entstehen Brönsted-Säurezentren, die unter Reaktionsbedingungen unerwünschte Nebenreaktionen (z. B. Isomerisieren oder Cracken) katalysieren können. Um dies zu vermeiden, werden alle Katalysatoren vor Beginn der Versuche 15 Minuten lang bei Reaktionstemperatur mit reinem Ammoniak gespült, wodurch die sauren Zentren vergiftet wurden.

Zeolith HZSM-58 wird gemäß der in Beispiel 1 beschriebenen Vorgehensweise über Festkörperionenaustausch mit Platin bzw. Palladium ausgetauscht. Die Edelmetallgehalte betragen 1,0 Gew.-% Pt bzw. 0,54 Gew.-% Pd. Die ausgetauschten Zeolithe werden bei 300 °C im Wasserstoffstrom reduziert. Die dabei entstandenen sauren Zentren werden durch Spülen mit Ammoniak bei 110 °C vergiftet und in der Hydrierung des Hexen-(1)/2,4,4-Trimethylpenten-(1)-Gemisches unter folgenden typischen Bedingungen getestet:

| | | |
|---|---|---|
| Reaktionstemperatur: | T | = 50 bis 110 °C |
| Modifizierte Verweilzeit: | W/F_{Olefine} | ≈ 3 bis 30 g·h/mol |
| Wasserstoff-Partialdruck: | p_{H} | ≈ 100 kPa, |
| Partialdruck der Alkene: | p_{Olefine} | = 7 bis 14 kPa |
| Katalysatormasse (trocken): | W | = 0,50 g |

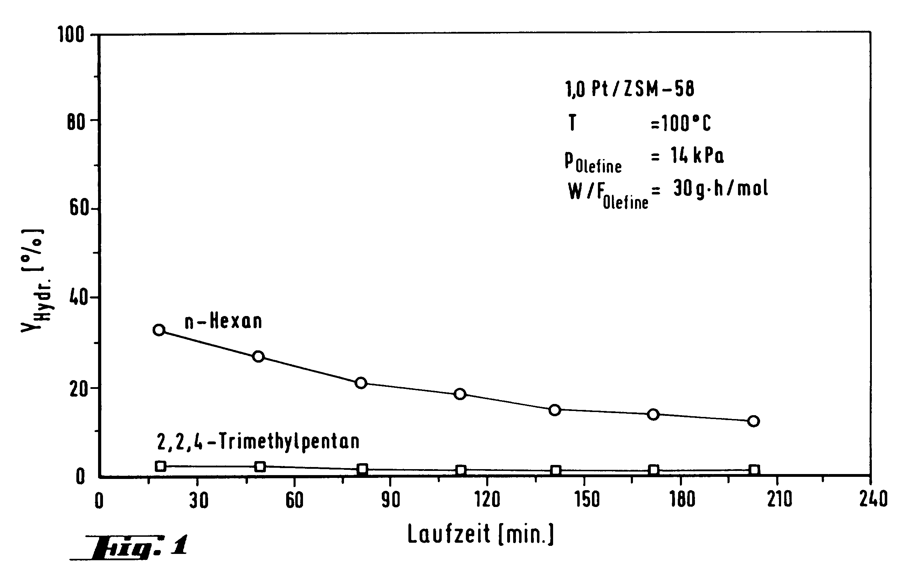

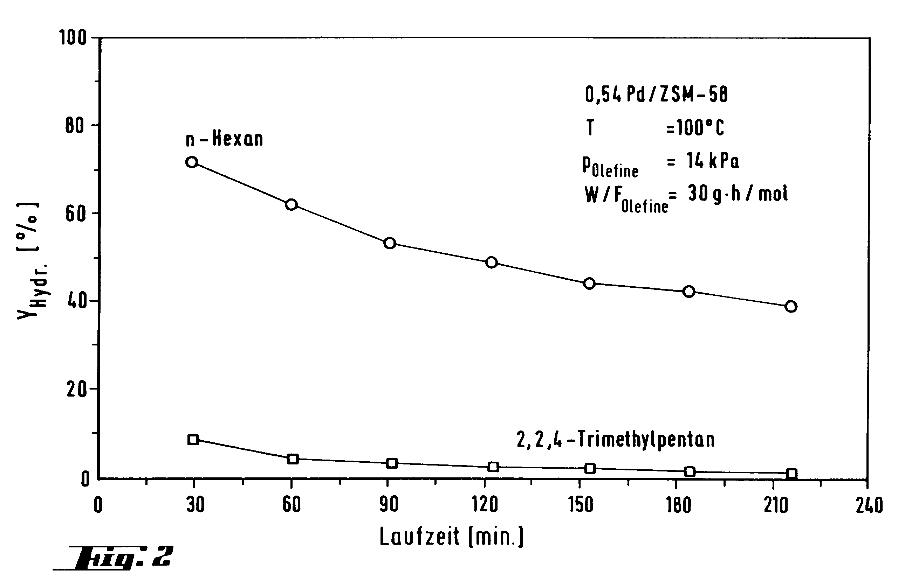

Die Ergebnisse der katalytischen Tests -sind in den Figuren 1 und 2 dargestellt. Aufgetragen sind jeweils die Ausbeuten an den Hydrierprodukten n-Hexan und 2,4,4-Trimethylpentan in Abhängigkeit von der Zeit. Es ist offensichtlich, daß an beiden Katalysatoren die Hydrierung des Hexen-1 stark bevorzugt ist. Es ist also gelungen, Platin bzw. Palladium über Festkörperionenaustausch in den engporigen Zeolith ZSM-58 einzubringen und dadurch einen formselektiven Hydrierkatalysator zu erzeugen.

### Beispiel 3 (Vergleichsbeispiel)

Zeolith HZSM-58 wird über Ionenaustausch in wäßriger Lösung von (Pt(NH₃)₄)Cl₂ bzw. (Pd(NH₃)₄)Cl₂ mit 2 Gew.-% Platin bzw. 1,1 Gew.-% Palladium (entsprechend gleichen Stoffmengen an Pt bzw. Pd) ausgetauscht. Für den Ionenaustausch in wäßriger Lösung werden jeweils ca. 5 g Zeolith in 200 cm³ Wasser suspendiert. Hierzu werden über einen Zeitraum von 3 Stunden unter ständigem Rühren ca. 100 cm³ Wasser getropft, in dem eine vorausberechnete Menge des Edelmetallkomplexes gelöst ist. Anschließend wird die Suspension noch für weitere 24 Stunden gerührt und dann im Rotationsverdampfer bis zur Trockene eingeengt. Das so erhaltene Pulver wird über Nacht bei 120 °C im Trockenschrank getrocknet.

Bei der hier beschriebenen Methode zum Einbringen von Edelmetall über Ionenaustausch mit wäßrigen Lösungen der Tetramminkomplexe ist es erforderlich, vor der Reduktion im H₂-Strom zunächst den eingetauschten Edelmetallkomplex durch eine 0₂-Behandlung zu zersetzen, wenn eine gute Dispersion des Edelmetallkomplexes sichergestellt werden soll (vgl. P. Gallezot, Catal. Rev.-Sci. Eng. 20, 121/154 (1979)). Der ausgetauschte Zeolith wird für 16 h bei 300 °C im Sauerstoffstrom (Vo₂ = 16 l/h) und dann für 16 h bei 300 °C im Wasserstoffstrom (V_{H} = 6 l/h) behandelt. Die ausgetauschten Zeolithe werden anschließend in der katalytischen Hydrierung des Gemisches aus gleichen Stoffmengen an Hexen-(1) und 2,4,4-Trimethylpenten-(1), wie in Beispiel 2 beschrieben, getestet. An beiden Katalysatoren werden beide Olefine unter den oben genannten Bedingungen zu 100 % hydriert. Es ist also nicht möglich, durch Ionenaustausch in wäßriger Lösung einen formselektiven Hydrierkatalysator herzustellen.

### Beispiele 4 bis 9

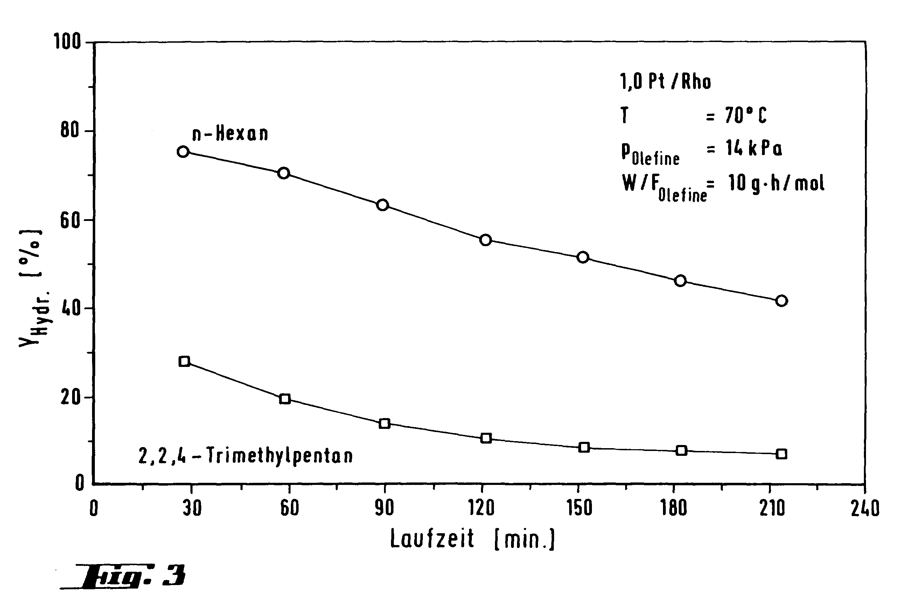

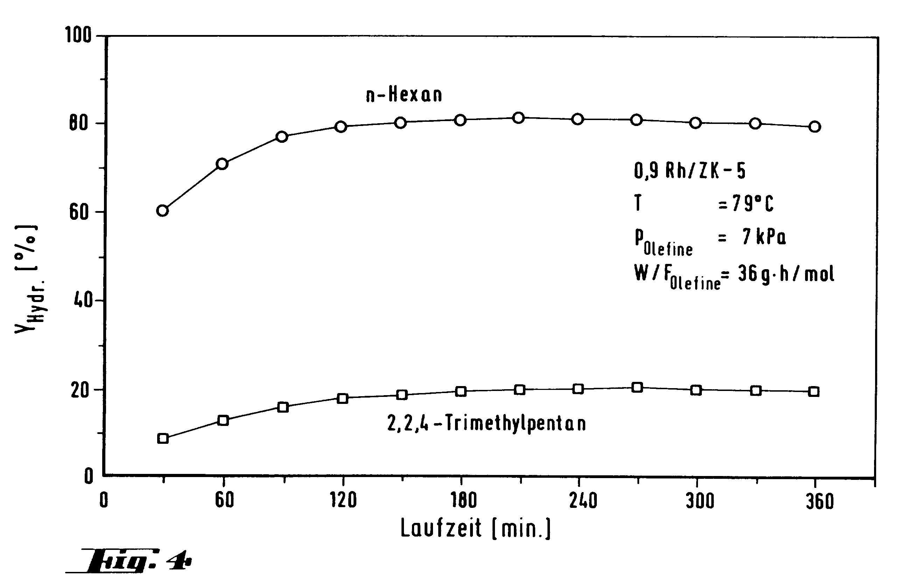

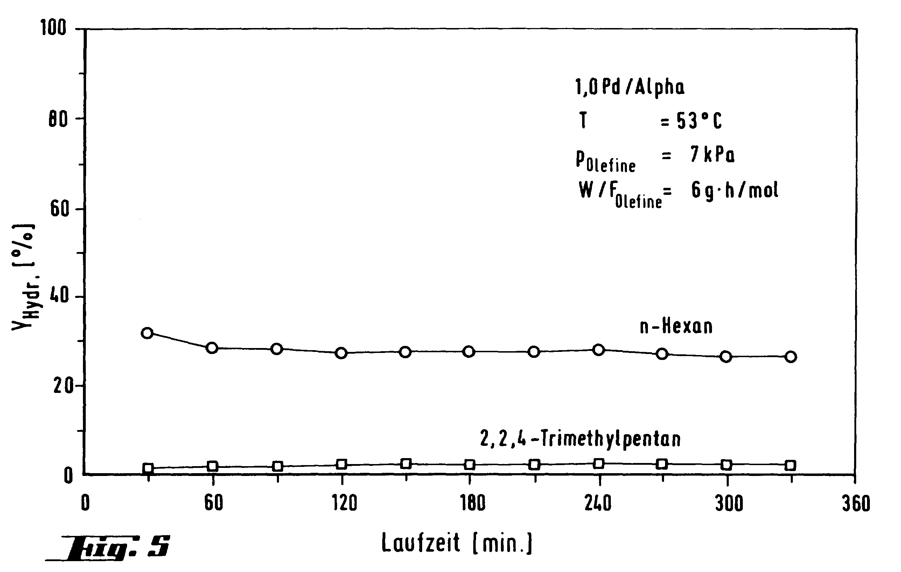

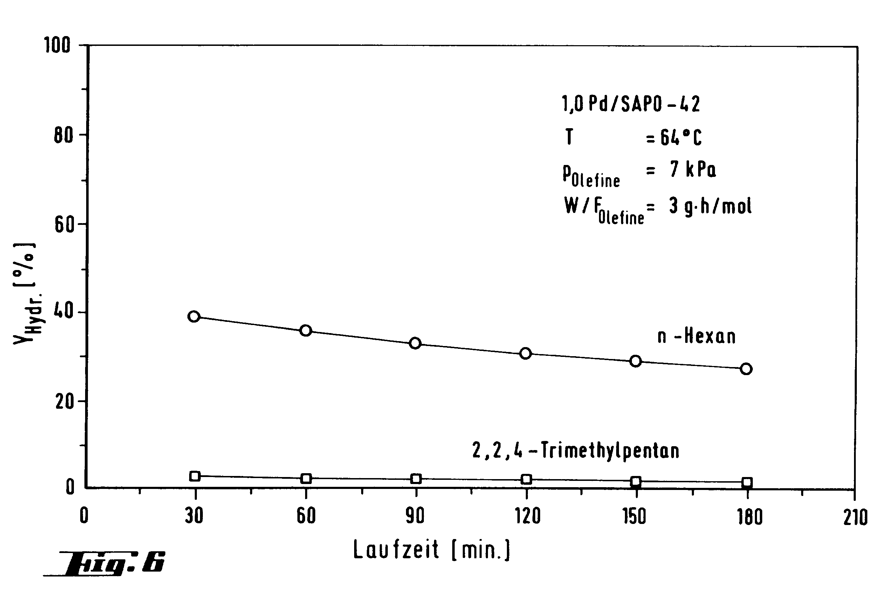

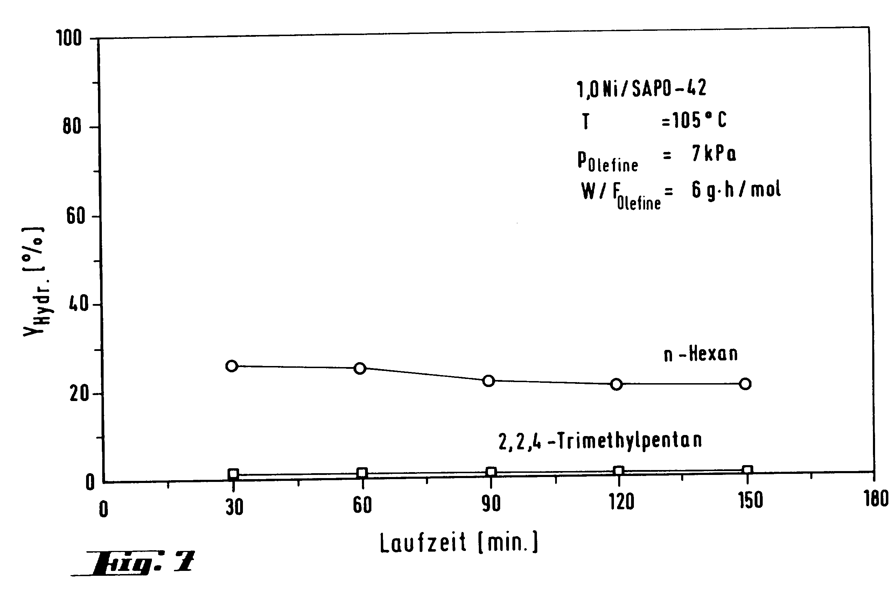

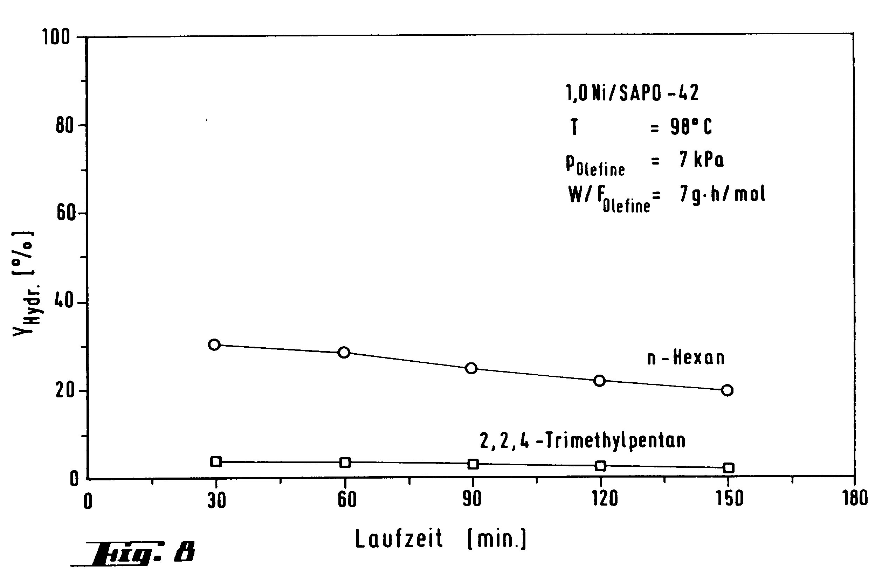

Zeolith Rho wird, wie in J. Catal. 113, 367/382 (1988) beschrieben, synthetisiert. Zeolith ZK-5 wird nach US Patent 3 720 753 und Zeolith Alpha nach US Patent 3 375 205 synthetisiert. Die Synthese von SAPO-42 erfolgt nach US Patent 4 440 871. Diese Zeolithe werden - wie in Beispiel 1 beschrieben - calciniert, mittels Ionenaustausch in wäßriger Lösung in die Ammoniumform und durch anschließende Kalzination in die H⁺-Form überführt und anschließend beim Festkörperionenaustausch eingesetzt. Die Mengen und die Art an eingesetztem Metallsalz, die Stoffmenge an wiedergefundenem Chlor sowie die erzielte Metallbeladung des Zeoliths nach der Reduktion im Wasserstoffstrom, die in der im Beispiel 1 beschriebenen Weise erfolgt, sind in Tabelle 2 zusammengefaßt. Es wird deutlich, daß in allen Fällen der Festkörperionenaustausch praktisch vollständig abläuft und Metallbeladungen von ca. 1 Gew.-% erzielt werden. Die Ergebnisse bei der Umsetzung des Hexen-(1)/2,4,4-Trimethylpenten-(1)-Gemisches an den erfindungsgemäß hergestellten Katalysatoren zeigen die Figuren 3 bis 8. In allen Fällen ist die Hydrierung des Hexen-1 stark bevorzugt, d. h., der überwiegende Anteil des eingebrachten Metalls befindet sich in den Zeolithporen. An den Palladium- und Nickel-haltigen Katalysatoren findet außer der Hydrierung auch noch eine Isomerisierung der Doppelbindung am Metall statt, wobei das schlanke Hexen-(1) in weitaus größerem Ausmaß umgesetzt wird als das sperrige 2,4,4-Trimethylpenten-(1).

Aus Tabelle 2 und Figur 8 geht hervor, daß der Festkörperionenaustausch nicht nur mit Metallhalogeniden sondern auch mit Metalloxiden durchgeführt werden kann. Dies ermöglicht, den Festkörperionenaustausch auch ohne die Freisetzung von für bestimmte Zeolithe unter Umständen schädlichem HCl-Gas durchzuführen.

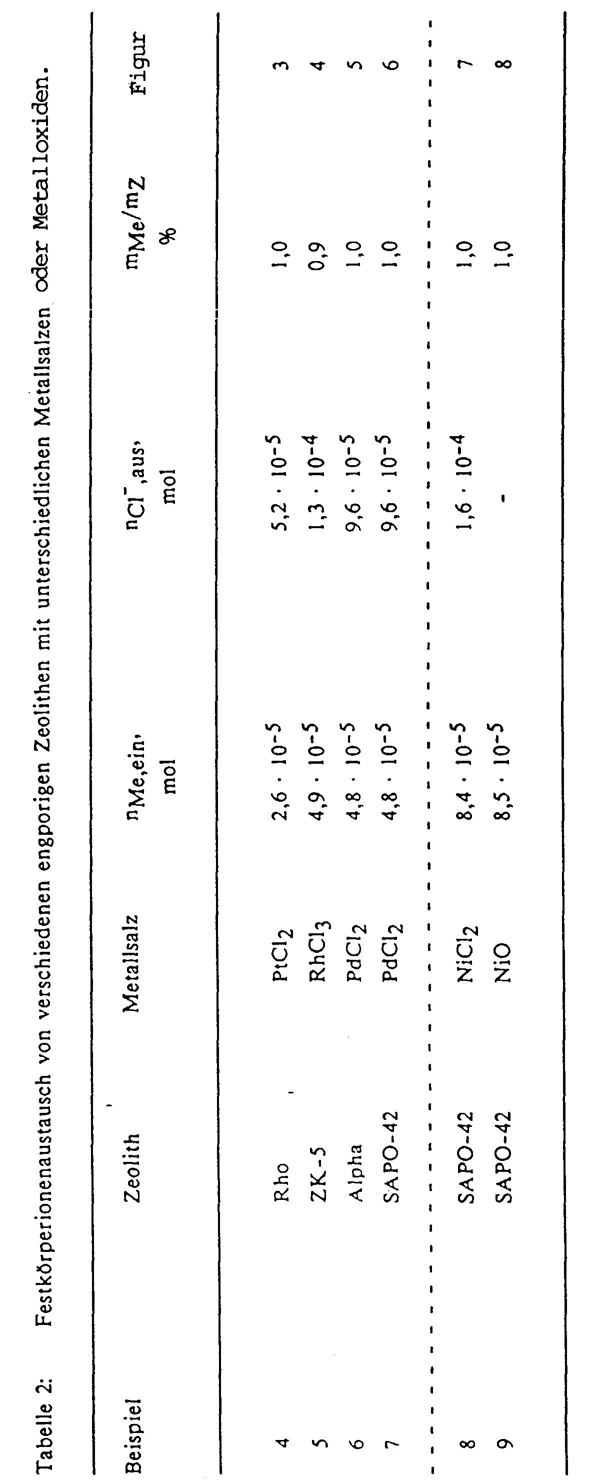

Es zeigen:
- Figur 1:: Ausbeuten an n-Hexan und 2,4,4-Trimethylpentan bei der Umsetzung des Hexen-(1)/2,4,4-Trimethylpenten-(1)-Gemisches an 1,0 Pt/ZSM-58 mit n_{Si}/n_{Al} = 50
- Figur 2:: Ausbeuten an n-Hexan und 2,2,4-Trimethylpentan bei der Umsetzung des Hexen-(1)/2,4,4-Trimethylpenten-(1)-Gemisches an 0,54 Pd/ZSM-58 mit n_{Si}/n_{Al} = 50
- Figur 3:: Ausbeuten an n-Hexan und 2,2,4-Trimethylpentan bei der Umsetzung des Hexen-(1)/2,4,4-Trimethylpenten-(1)-Gemisches an 1,0 Pt/Rho
- Figur 4:: Ausbeuten an n-Hexan und 2,2,4-Trimethylpentan bei der Umsetzung des Hexen-(1)/2,4,4-Trimethylpenten-(1)-Gemisches an 0,9 Rh/ZK-5
- Figur 5:: Ausbeuten an n-Hexan und 2,2,4-Trimethylpentan bei der Umsetzung des Hexen-(1)/2,4,4-Trimethylpenten-(1)-Gemisches an 1,0 Pd/Alpha
- Figur 6:: Ausbeuten an n-Hexan und 2,2,4-Trimethylpentan bei der Umsetzung des Hexen-(1)/2,4,4-Trimethylpenten-(1)-Gemisches an 1,0 Pd/SAPO-42
- Figur 7:: Ausbeuten an Hydrierprodukten bei.der Hydrierung des Hexen-(1)/2,4,4-Trimethylpenten-(1)-Gemisches an 1,0 Ni/SAPO-42; hergestellt durch Festkörperionenaustausch von SAPO-42 mit NiCl₂
- Figur 8:: Ausbeuten an Hydrierprodukten bei der Hydrierung des Hexen-(1)/2,4,4-Trimethylpenten-(1)-Gemisches an 1,0 Ni/SAPO-42; hergestellt durch Festkörperionenaustausch von SAPO-42 mit NiO

## Patentansprüche

1. Verfahren zum Modifizieren von engporigen Molekularsieben des Typs ZSM-58, Alpha, SAPO-42, Rho und/oder ZK5 mittels Ionenaustausch, dadurch gekennzeichnet, daß man Kationen mittels Festkörperionenaustausch in die Molekularsiebe einbringt, dabei wird der Festkörperionenaustausch durchgeführt, indem man den Zeolith mit einer Verbindung, die das Kation enthält, innig vermischt, das Gemenge in einem Inertgasstrom auf Temperaturen von 400 bis 600 °C aufheizt, danach auf Raumtemperatur abkühlt und anschließend im Wasserstoffstrom für 10 bis 14 Stunden bei 280 bis 350 °C reduziert.

2. Verfahren nach Anspruch 1, dadurch gekennzeichnet, daß man als Kationen Kationen eines Metalls aus der ersten bis achten Nebengruppe des Periodensystems in der Form eines Salzes oder Oxides einsetzt.

## Claims

1. Process for modifying narrow-pored molecular sieves of the type ZSM-58, Alpha, SAPO-42, Rho and/or ZK5 by ion exchange, characterised in that cations are introduced into the molecular sieves by solid-state ion exchange, the solid-state ion exchange being performed by intimately mixing the zeolite with a compound containing the cation ion, heating the mixture to temperatures of 400 to 600°C in a stream of inert gas, then cooling to room temperature and subsequently reducing in a stream of nitrogen for 10 to 14 hours at 280 to 350°C.

2. Process according to claim 1, characterised in that the cations used are cations of a metal from subgroups 1 to 8 of the periodic system in the form of a salt or oxide.

## Revendications

1. Procédé de modification de tamis moléculaires poreux du type ZSM- 58, alpha, SAPO-42, Rho et/ou ZK5 par échange d'ions,
caractérisé en ce qu'
on introduit des cations au moyen d'échange d'ions de corps solide dans le tamis moléculaire, en outre l'échange d'ions de corps solide est réalisé, en mélangeant intimement la zéolithe avec un composé qui contient le cation, en chauffant le mélange dans un courant de gaz inerte à des températures de 400 à 600°C, en refroidissant ensuite à la température ambiante et en opérant une réduction dans le courant d'hydrogène pendant 10 à 14 heures de 280 à 350°C.

2. Procédé selon la revendication 1,
caractérisé en ce qu'
on met en oeuvre, comme cations, des cations d'un métal provenant du premier au huitième sous groupe du système périodique sous la forme d'un sel ou d'un oxyde.
